# EUROPÄISCHE PATENTSCHRIFT

(11) **EP 3 914 481 B1**
(45) Veröffentlichungstag und Bekanntmachung des Hinweises auf die Patenterteilung: **08.03.2023**
(21) Anmeldenummer: 20702590.9
(22) Anmeldetag: 23.01.2020
(51) Int. Cl.: B60R 21/017

(54) **VORRICHTUNG ZUR AUSLÖSUNG EINER SCHUTZFUNKTION IN EINEM FAHRZEUG**
DEVICE FOR INITIATING A PROTECTIVE FUNCTION IN A VEHICLE
DISPOSITIF POUR DÉCLENCHER UNE FONCTION DE PROTECTION DANS UN VÉHICULE

(30) Priorität: 24.01.2019 DE 102019101732; 24.01.2019 DE 102019101733; 24.01.2019 DE 102019101735; 24.01.2019 DE 102019101739
(43) Veröffentlichungstag der Anmeldung: 01.12.2021
(73) Patentinhaber: Elmos Semiconductor SE, 44227 Dortmund (DE)
(72) Erfinder: ABAZA, Fikret, 47169 Duisburg (DE); SCHÜRSTEDT, Jens-Arne, 45527 Hattingen (DE)
(74) Vertreter: dompatent von Kreisler Selting Werner - Partnerschaft von Patent- und Rechtsanwälten mbB
(86) Internationale Anmeldenummer: PCT/EP2020/051655
(87) Internationale Veröffentlichungsnummer: WO 2020/152281

(56) Entgegenhaltungen:
- DE-A1-102018 107 441

## Beschreibung

Die Erfindung betrifft eine Vorrichtung zur Auslösung einer Schutzfunktion in einem Fahrzeug durch Aktivierung einer ersten Auslösekomponente, die neben mindestens einer weiteren Auslösekomponente für die Auslösung der Schutzfunktion erforderlich ist, wie z.B. bei einem Airbag, einem Gurtstraffer oder einem Gurttrenner. Insbesondere betrifft die Erfindung eine Vorrichtung zur Überprüfung eines Sicherheitsschalters Tₑₓₜ im Zündschaltkreis eines Airbag-Sicherheitssystems im laufenden Betrieb und zur gleichzeitigen Überprüfung des Wirkpfades von der Sensorschnittstelle PSI5b bis zur Ansteuerung V_{G} des Sicherheitsschalters Tₑₓₜ. Die Erfindung ist auf diese Anwendung aber nicht beschränkt. Sie kann in analoger Weise in ähnlichen Anwendungen, beispielsweise Gurtstraffersystemen etc. eingesetzt werden. Teile der Erfindung haben generelleren Charakter.

Aus der DE-A-197 48 311 ist eine Ansteuerschaltung für eine Fahrzeuginsassen-Sicherheitsvorrichtung bekannt. In DE-A-10 2005 045 233 ist ein Steuergerät für den Personenschutz beschrieben.

Aus DE-B-103 02 789 ist eine Ansteuerschaltung für ein Insassenschutzsystem ohne zusätzlichen Sicherheitstransistor bekannt, bei dem die Spannung über einen Zündkreis aus einem Highside-Transistor, der Zündpille und einem Lowside-Transistor konstant gehalten wird. Ferner ist in DE-A-10 2005 008 905 eine Spannungsbegrenzungsschaltung für die Spannung über einem Zündkreis aus einem Highside-Transistor, einer Zündpille und einem Lowside-Transistor beschrieben, wobei auch bei dieser Schaltung ein Sicherheitsschalter nicht bereitgestellt wird.

Aus der DE-A-10 2005 030 770 sind eine Schaltungsanordnung und ein Verfahren zum Steuern einer Sicherheitseinrichtung für ein Fahrzeug bekannt, wobei die Schaltungsanordnung über einen Sicherheitstransistor verfügt.

Aus der DE-T-60 2004 006 973 (EP-A-1 602 532) ist eine Steuervorrichtung zur Aktivierung eines Fahrzeugsicherheits-Aktivierungselements mit einem Sicherheitstransistor und einer Stromregelung bekannt.

Aus der DE-B-102 55 115 ist eine Ansteuerschaltung für eine Zündpille eines Fahrzeugrückhaltesystems bekannt, bei dem die Stromeinstellung über den Sicherheitstransistor erfolgt.

Aus der DE-A-10 2010 028 544 ist ein Steuergerät für einen Betrieb eines Sicherheitssystems für ein Fahrzeug mit einem Aufwärtswandler bekannt, der als ein Schaltwandler ausgebildet ist und der eine von einer Fahrzeugbatteriespannung abgeleitete Eingangsspannung in eine höhere Ladespannung an seinen Ausgang wandelt. Das bekannte Sicherheitssystem weist ferner einen Energiereservespeicher auf, der mittels der Ladespannung für den Betrieb des Sicherheitssystems in einem Autarkiefall aufgeladen wird. Die technische Lehre der DE-A-10 2010 028 544 ist dadurch gekennzeichnet, dass wenigstens ein Abwärtswandler invertiert zum Aufwärtswandler betrieben wird, wobei der wenigstens eine Abwärtswandler die Ladespannung oder eine von dem Energiereservespeicher abgegebene Spannung abwärts wandelt. Abwärts- und Aufwärtswandler werden dabei über zwei separate SPI-Schnittstellen betrieben, was eine unabhängige Steuerung erlaubt.

Aus der WO-A-2004/087468 ist eine Steuereinheit für ein Rückhaltesystem bekannt. Dabei wird ein Software-Element über eine bereits vorhandene Diagnoseschnittstelle des Steuergeräts eingespeist, das alle Zündkreise und den Auslösealgorithmus zur Zündung aller Zündkreise konfiguriert und für einen Sicherheitsbaustein, der unabhängig von einem Prozessor im Steuergerät die Sensorwerte überprüft und dann gegebenenfalls in Abhängigkeit von der Überprüfung die Zündkreise freigibt, solche Sensorwerte emuliert, so dass der Sicherheitsbaustein diese Zündkreise freigibt.

Eine Vorrichtung zur Auslösung einer Schutzfunktion in einem Fahrzeug ist nach dem Oberbegriff des Anspruchs 1 beispielsweise aus DE-A-10 2018 107 441 bekannt.

Der Erfindung liegt daher die Aufgabe zugrunde, eine Lösung zu schaffen, die eine sichere Überprüfung einer Vorrichtung zur Auslösung einer Schutzfunktion in einem Fahrzeug durch Aktivierung einer ersten Auslösekomponente, die neben mindestens einer weiteren Auslösekomponente für die Auslösung der Schutzfunktion erforderlich ist, wie z.B. bei einem Airbag, einem Gurtstraffer oder einem Gurttrenner ermöglicht.

Zur Lösung dieser Aufgabe wird mit der Erfindung eine Vorrichtung Auslösung einer Schutzfunktion in einem Fahrzeug durch Aktivierung einer ersten Auslösekomponente, die neben mindestens einer weiteren Auslösekomponente für die Auslösung der Schutzfunktion erforderlich ist, wie z.B. bei einem Airbag, einem Gurtstraffer oder einem Gurttrenner vorgeschlagen, wobei die Vorrichtung versehen ist mit
- einem Mikrorechner µC,
- einer ersten Auslösekomponente Tₑₓₜ, die neben mindestens einer weiteren Auslösekomponente für die Auslösung der Schutzfunktion erforderlich ist,
- einer mikroelektronischen Schaltung IC, die aufweist
   - mindestens eine weitere Auslösekomponente CTR, T1, T2,
   - eine erste Datenbusschnittstelle MSPI,
   - eine zweite Datenbusschnittstelle SSPI,
   - eine Sensorbusschnittstelle PSI5IF, an die ein mit mehreren Sensoren versehener Sensorbus anschließbar ist,
   - eine erste Sensorsignal-Simulationseinheit SSSE zur Simulation von Sensorsignalen,
   - wobei der zweiten Datenbusschnittstelle SSPI innerhalb der mikroelektronischen Schaltung IC Sensordaten zuführbar sind, die in über die Sensorbusschnittstelle PSI5IF empfangenen Sensorsignalen enthalten sind, und
   - wobei der Sensorbusschnittstelle PSI5IF innerhalb der mikroelektronischen Schaltung IC simulierte Sensorsignale zuführbar sind, die der zweiten Datenbusschnittstelle SSPI zuführbar sind, und zwar mit oder ohne weiteren Sensordaten, die in über die Sensorbusschnittstelle PSI5IF empfangenen Sensorsignalen enthalten sind, und
   - eine Sicherheitseinheit SHE, die Sensordaten, die innerhalb der mikroelektronischen Schaltung IC der zweiten Datenbusschnittstelle SSPI zuführbar sind, überprüft und insbesondere auf mögliche Fehler der Sensordaten und/oder auf eine potentielle Auslösung der Schutzfunktion anzeigende Auffälligkeiten der Sensordaten hin überprüft,
- wobei der Mikrorechner µC in Kommunikationsverbindung mit der ersten Datenbusschnittstelle MSPI steht und über diese erste Datenbusschnittstelle MSPI die Sicherheitseinheit SHE der mikroelektronischen Schaltung IC zur Überprüfung der der zweiten Datenbusschnittstelle SSPI zuführbaren Sensordaten veranlasst und/oder die Sensorsignal-Simulationseinheit SSSE veranlasst, simulierte Sensorsignale zu erzeugen, und/oder an die Sensorsignal-Simulationseinheit SSSE Daten für die Erzeugung von simulierten Sensorsignalen zuführt,
- wobei der Mikrorechner µC über die erste Datenbusschnittstelle MSPI die Sensorsignal-Simulationseinheit SSSE veranlasst, Sensorsignale zu simulieren und
- wobei der Mikrorechner µC in Kommunikationsverbindung mit der zweiten Datenbusschnittstelle SSPI steht und über die zweite Datenbusschnittstelle SSPI insbesondere auf einen von dem Mikrorechner µC an die zweite Datenbusschnittstelle SSPI gerichtetes Anforderungssignal hin Sensordaten, die in über die Sensorbusschnittstelle PSI5IF empfangenen Sensorsignalen enthalten und innerhalb der mikroelektronischen Schaltung IC der zweiten Datenbusschnittstelle SSPI zuführbar sind und/oder Sensordaten abfragt, die in von der Sensorsignal-Simulationseinheit SSSE simulierten sowie innerhalb der mikroelektronischen Schaltung IC an die Sensorbusschnittstelle PSI5IF übertragenen Sensorsignalen enthalten und innerhalb der mikroelektronischen Schaltung IC der zweiten Datenbusschnittstelle SSPI zuführbar sind.

Nach der Erfindung ist sinngemäß vorgesehen, den extern der mikroelektronischen Schaltung angeordneten Mikrorechner über zwei Datenbusschnittstellen mit der mikroelektronischen Schaltung zu verbinden. Damit kann der Mikrorechner über zwei Kommunikationskanäle, die Teil ein und desselben Datenbussystems sein können, mit der mikroelektronischen Schaltung in Verbindung treten. Die erste Datenbusschnittstelle MSPI dient der Konfiguration von Komponenten der mikroelektronischen Schaltung und dem Schreiben in und Auslesen aus Registern, während die zweite Datenbusschnittstelle SSPI dazu dient, dass der Mikrorechner die an dieser Datenbusschnittstelle anstehenden Sensordaten jederzeit abfragen kann, und zwar unabhängig von und insbesondere zeitgleich mit seiner Kommunikation mit der mikroelektronischen Schaltung über die ersten Datenbusschnittstelle.

Die Datenbusschnittstellen müssen nach der Erfindung keinen besonderen Anforderungen hinsichtlich Hardware und Software genügen. Als Datenbus eignet sich ein PSI-Datenbus, insbesondere ein PSI5- oder ein DSI3-Datenbus.

Die Auslösung der Schutzfunktion, beispielsweise das Aufblasen eines Airbags wird dann durchgeführt, wenn der mikroelektronischen Schaltung über die Sensorbusschnittstelle entsprechende Sensordaten bzw. Sensorsignale zugeführt werden. Diejenigen Sensorsignale und Sensordaten, die intern in der mikroelektronischen Schaltung der zweiten Datenbusschnittstelle zugeführt werden, werden insbesondere dauerhaft, zumindest aber diskontinuierlich und mit kurzen Pausen von der Sicherheitseinheit SHE überwacht und überprüft. Die Sicherheitseinheit SHE erkennt anhand der Sensordaten eine möglicherweise sich abzeichnende Situation, in der die Schutzfunktion ausgelöst werden muss. Darüber hinaus kann die Sicherheitseinheit SHE aber auch, initiiert durch den Mikrorechner und dessen Kommunikation mit der mikroelektronischen Schaltung über die erste Datenbusschnittstelle, dazu veranlasst werden, eine Überprüfung durchzuführen, ob die extern der mikroelektronischen Schaltung angeordnete erste Auslösekomponente ordnungsgemäß funktioniert. Dies ist aber nur ein Teil der Überprüfungsaufgaben der Sicherheitseinheit SHE. Diese überwacht beispielsweise auch die Energieversorgungseinheit EV für die Bereitstellung der Energie für die Auslösekomponenten, die an dem Prozess der Auslösung und Durchführung der Schutzfunktion beteiligt sind. Dabei handelt es sich im Regelfall bei der ersten Auslösekomponente um einen Halbleiter-Sicherheitsschalter in Form insbesondere eines Transistors, der typischerweise in Reihe mit weiteren Auslösekomponenten geschaltet ist. Bei diesen weiteren Auslösekomponenten handelt es sich typischerweise um Transistoren bzw. weitere Schalter, die Teil der mikroelektronischen Schaltung sind. So ist es beispielsweise möglich, dass diese weiteren Schalter nach Art einer Halbbrücke mit einem pyrotechnischen Zündelement geschaltet sind. Mehrere derartige Reihenschaltungen aus integrierten, innerhalb der mikroelektronischen Schaltung befindlichen Transistoren und extern mit diesen jeweils verschalteten Zündelemente sind parallel zueinander geschaltet und mit dem einen externen Sicherheitsschalter, d.h. mit der ersten Auslösekomponente verbunden.

Die Sicherheitseinheit SHE kann überdies den Open-Loop- oder den Close-Loop-Regler einer Energieversorgungseinheit EV überwachen. Schließlich kann die Sicherheitsfunktion auch eine Diagnose der Spannungen an verschiedenen Knotenpunkten der mikroelektronischen Schaltung sowie an externen Knotenpunkten umfassen.

Von Bedeutung für die Erfindung ist ferner, dass die mikroelektronische Schaltung intern virtuelle, d.h. simulierte Sensordaten erzeugen kann. Hierzu dient erfindungsgemäß die Sensorsignal-Simulationseinheit, die der Sensorbusschnittstelle der mikroelektronischen Schaltung intern simulierte Sensorsignale zuführt. Ein derartiges "virtuelles" Sensorsystem ist im Stand der Technik als externe Komponente, d.h. als außerhalb der mikroelektronischen Schaltung IC befindliche Komponente der Vorrichtung bekannt. Erfindungsgemäß wird nun ein derartiges virtuelles Sensorsystem Teil der mikroelektronischen Schaltung. Über diese Sensorsignal-Simulationseinheit SSSE können beispielsweise auch bewusst Fehlersignale eingespeist werden, um dann die Reaktion der mikroelektronischen Schaltung an der zweiten Datenbusschnittstelle durch den Mikrorechner abzufragen. Dadurch kann der Mikrorechner das Ergebnis einer von ihm selbst initiierten Überprüfung der Funktionalität der mikroelektronischen Schaltung überprüfen. Die Initiierung einer derartigen Überprüfung erfolgt durch die Kommunikation des Mikrorechners mit der mikroelektronischen Schaltung über deren erste Datenbusschnittstelle MSPI, um dann das Ergebnis der so initiierten Überprüfung an der zweiten Datenbusschnittstelle abzufragen, was ebenfalls über den Mikrorechner erfolgt. Die verschiedenen Szenarien einer derartigen Vorgehensweise, beispielsweise das bewusste Erzeugen von Fehlersignalen, um nämlich die darauf erfolgende Reaktion der mikroelektronischen Schaltung zu testen, sind ebenfalls möglich.

Wie bereits oben beschrieben, ist also die Sensorsignal-Simulationseinheit SSSE Teil der erfindungsgemäß vorgesehenen mikroelektronischen Schaltung. Das schließt allerdings nicht aus, dass eine weitere Sensorsignal-Simulationseinheit PSS als externes Sensorsystem vorgesehen ist, das über die Sensorbusschnittstelle oder einen Kanal der Sensorbusschnittstelle der mikroelektronischen Schaltung zugeführt wird. Über die Sensorbusschnittstelle wird im Regelfall ein Sensorbus angeschlossen, an den wiederum mehrere reale Hardware-Sensoren für verschiedene Messdaten angeschlossen sind, die relevant sind, um im Bedarfsfalle die Schutzfunktion auszulösen. Hierzu gehören Beschleunigungs-, Druck-, Temperatur-Sensoren o.dgl. Sensoren. An den Sensorbus kann nun auch die externe weitere Sensorsignal-Simulationseinheit angeschlossen sein.

In weiterer zweckmäßiger Ausgestaltung der Erfindung kann, wie bereits angedeutet, die erste Auslösekomponente mindestens einen extern der mikroelektronischen Schaltung IC angeordneten Sicherheitsschalter Tₑₓₜ, S₁ aufweisen.

Schließlich ist es gemäß einer weiteren Ausgestaltung der Erfindung auch möglich, dass die mindestens eine weitere Auslösekomponente zwei weitere in Reihe geschaltete Schalter T1, T2 in Form von Halbleiterbauelementen und insbesondere in Form von Transistoren und eine Ansteuerschaltung CTR für diese aufweist, wobei zwischen den beiden Schaltern T1, T2 in Reihe mit diesen ein externes Zündelement SQ geschaltet ist, also mit den beiden Schaltern verbunden ist.

Die Erfindung wird nachfolgend anhand der Zeichnung näher erläutert. Im Einzelnen zeigen dabei:
- Fig. 1: ein Blockschaltbild zur Verdeutlichung einiger der Komponenten der erfindungsgemäßen Vorrichtung,
- Fig. 2: schematisch vereinfacht eine Vorrichtung mit beispielhaft vorgesehenen Komponenten,
- Fig. 3: ein grundlegendes Verfahren zur Prüfung des externen Sicherheitsschalters Tₑₓₜ und
- Fig. 4: ein verfeinertes Verfahren zur Prüfung des Sicherheitsschalters Tₑₓₜ.

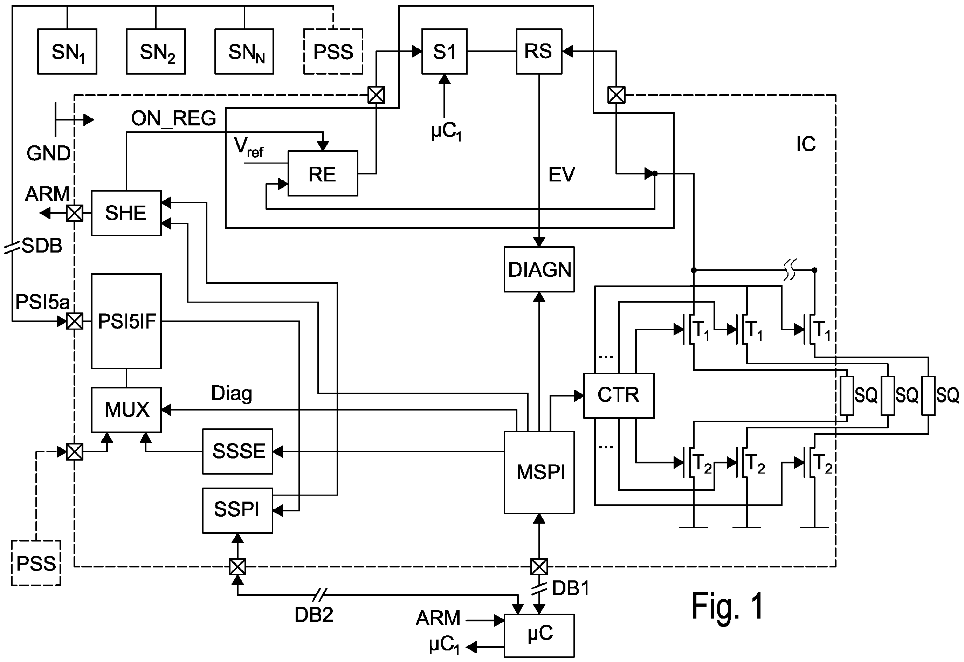

In Fig. 1 ist schematisch und als Blockschaltbild ein Ausführungsbeispiel der Erfindung gezeigt. Zentrales Element der erfindungsgemäßen Vorrichtung ist eine mikroelektronische Schaltung IC, die von extern Sensorsignale erhält und von extern angesteuert wird, um Komponenten zur Auslösung einer Schutzfunktion zum Schutz der Insassen eines Fahrzeugs vor Verletzungen bei einem Unfall anzusteuern.

Die mikroelektronische Schaltung IC ist in Fig. 1 durch gestrichelte Linien gekennzeichnet. Teil der mikroelektronischen Schaltung ist eine Energieversorgungseinheit EV, die zum Teil externe Bauelemente aufweist, d.h. Bauelemente aufweist, die außerhalb der mikroelektronischen Schaltung IC angeordnet und über Anschlusspins mit dieser verbunden sind. Im in Fig. 1 gezeigten Ausführungsbeispiel weist die Energieversorgungseinheit EV einen Spannungsregelkreis auf, der einen Regler RE und eine Regelstrecke RS aufweist. Zwischen dem Regler RE und der Regelstrecke RS befindet sich optional ein erster Schalter S1, der die Spannungsregelung über die Regelstrecke RS im geschlossenen Zustand ermöglicht und im geöffneten Zustand die Regelstrecke RS insoweit inaktiv schaltet. Dies dient der weiteren Sicherheit vor einer unbeabsichtigten Fehlauslösung der Schutzfunktion.

Ebenfalls Teil der mikroelektronischen Schaltung IC ist ein bzw. sind mehrere Paare von ersten und zweiten Transistoren T1, T2, zwischen denen ein pyrotechnisches Zündelement SQ jeweils geschaltet ist. Diese Zündpfade befinden sich zwischen Massepotenzial GDN und dem Knoten V5, bei dem es sich um einen Anschlusspin der mikroelektronischen Schaltung IC handeln kann.

Die ersten und zweiten Transistoren T1, T2 werden über einen Ansteuerschaltkreis CTR angesteuert, der innerhalb der mikroelektronischen Schaltung IC ausgebildet ist und innerhalb dieser Schaltung mit einer ersten Datenbusschnittstelle MSPI verbunden ist. Extern ist an diese erste Datenbusschnittstelle MSPI ein erster Datenbus DB1 angeschlossen, über den ein externer Mikrorechner µC mit der ersten Datenbusschnittstelle MSPI verbunden ist. Über diesen ersten Datenbus DB1 lässt sich die mikroelektronische Schaltung IC konfigurieren und mit Informationen beschreiben bzw. es können Informationen aus der mikroelektronischen Schaltung IC ausgelesen werden.

Darüber hinaus ist der Mikrorechner µC über einen zweiten Datenbus DB2 mit einer zweiten Datenbusschnittstelle SSPI der mikroelektronischen Schaltung IC verbunden. Über diese zweite Verbindung fragt der Mikrorechner µC Sensordaten ab, die, wie noch beschrieben werden wird, innerhalb der mikroelektronischen Schaltung IC verarbeitet und bereitgestellt werden, und zwar einerseits anhand von von extern kommenden Sensorsignalen und andererseits von Sensorsignalen eines "virtuellen" Sensorsystems (Sensorsignal-Simulationseinheit - SSSE), das erfindungsgemäß Teil der mikroelektronischen Schaltung IC ist.

Die mikroelektronische Schaltung IC weist ferner eine Sensorbusschnittstelle PSI5IF auf, an die ein Sensordatenbus SDB angeschlossen ist. An diesem Sensordatenbus SDB sind eine Vielzahl von Sensoren SN1, SN2, ..., SNN angeschlossen. Derartige Sensoren dienen der Erfassung von für die Auslösung der Schutzfunktion erforderlichen Messwerten. Bei den Sensoren handelt es sich beispielsweise um Sensoren zur Messung der Beschleunigung, des Drucks, der Temperatur usw. An den Sensordatenbus SDB kann überdies ein externes "virtuelles" Sensorsystem PSS angeschlossen sein, mit dem beispielsweise vom Mikrorechner µC initiiert oder vorgegeben Sensorsignale erzeugt werden, die dem Test und der Diagnose der mikroelektronischen Schaltung IC dienen können. Ein derartiges "virtuelles" Sensorsystem PSS kann aber auch über einen zweiten Kanal des Sensordatenbus SDB mit der mikroelektronischen Schaltung IC verbunden sein. Beides ist in Fig. 1 angedeutet.

Von der Sensorbusschnittstelle PSI5IF aus werden die in dieser Schnittstelle aufgearbeiteten Sensorsignale als Sensordaten innerhalb der mikroelektronischen Schaltung IC deren zweiten Datenbusschnittstelle SSPI zugeleitet. Dort können sie dann von dem Mikrorechner µC abgefragt werden. Die Sensordaten werden durch eine Sicherheitseinheit SHE überwacht. In der Sicherheitseinheit SHE werden die Sensordaten auf mögliche Auffälligkeiten, Fehler o.dgl. überprüft, um sicher entscheiden zu können, inwieweit die aktuell anstehenden Sensordaten das Vorbereiten eines Auslösens der Schutzfunktion signalisieren. In einem derartigen Fall aktiviert die Sicherheitseinheit SHE unter anderem die Energieversorgungseinheit EV, so dass nun am Knoten V5 die erforderliche Versorgungsspannung ansteht, um im Bedarfsfälle ein oder mehrere der Zündelemente SQ auszulösen. Welche dieser Zündelemente SQ beispielsweise bei einem Unfall gezündet werden sollen, hängt unter anderem von dem Hergang des Unfalls ab. All diese Gesichtspunkte sind nicht Gegenstand der Erfindung.

Der Datenbusschnittstelle PSI5IF werden neben den über den Sensordatenbus SDB anstehenden Sensorsignalen auch Sensorsignale der Sensorsignal-Simulationseinheit SSSE zugeführt. Wenn, wie als eine Alternative in Fig. 1 gezeigt, ein externes "virtuelles" Sensorsystem PSS über einen zweiten Kanal des Sensordatenbus SDB angeschlossen ist, so entscheidet ein Umschalter, nämlich ein Multiplexer MUX darüber, welche simulierten Sensorsignale von welcher Einheit ("virtuelles" Sensorsystem - PSS oder Sensorsignal-Simulationseinheit - SSSE) der Sensorbusschnittstelle PSI5IF zugeführt werden.

Der externe Mikrorechner µC sendet zur Aktivierung der Sensorsignal-Simulationseinheit SSSE an diese ein Auslösesignal bzw. sendet an diese Sensorsignale, die dann durch die Sensorsignal-Simulationseinheit SSSE an die Sensorbusschnittstelle PSI5IF weitergegeben werden. Im Falle der Verwendung des Multiplexer MUX wird dann dieser mit einem entsprechenden Umschaltsignal Diag versorgt.

Die Initiierung von "virtuellen" Sensorsignalen durch optional extern angeordnete virtuelle Sensorsysteme PSS erfolgt ebenfalls beispielsweise durch den Mikrorechner µC.

Die mikroelektronische Schaltung IC kann darüber hinaus einen Diagnoseschaltkreis DIAGN aufweisen, der verschiedene Komponenten, die auch extern angeordnet sein können, der erfindungsgemäßen Vorrichtung diagnostiziert.

Wesensmerkmal der Erfindung ist zum einen die Aufteilung der Kommunikation des Mikrorechners µC mit der mikroelektronischen Schaltung IC über die beiden Datenbusse DB1, DB2, die auch als verschiedene Kanäle eines Datenbussystems aufgefasst werden können. Auf diese Art und Weise stehen die für die Überwachung der Funktionstüchtigkeit der mikroelektronischen Schaltung IC und für die Signalisierung einer potenziell erforderlichen Schutzfunktionsauslösung relevanten Sensordaten dauerhaft und stets zur Verfügung. Die Abfrage dieser Sensordaten wird also in keinem Falle durch eine gerade erfolgende andersartige Kommunikation des Mikrorechners µC mit der mikroelektronischen Schaltung IC unterbrochen. Darüber hinaus ist die in der mikroelektronischen Schaltung IC erfolgende Erzeugung von simulierten Sensorsignalen ein weiterer Aspekt der Erfindung. Durch die Integration dieser Sensorsignal-Simulationseinheit SSSE werden die Folgen eines externen Leitungsbruchs oder -abrisses, wie sie bei einer externen Anordnung von "virtuellen" Sensorsystemen PSS möglich ist, ausgeschlossen.

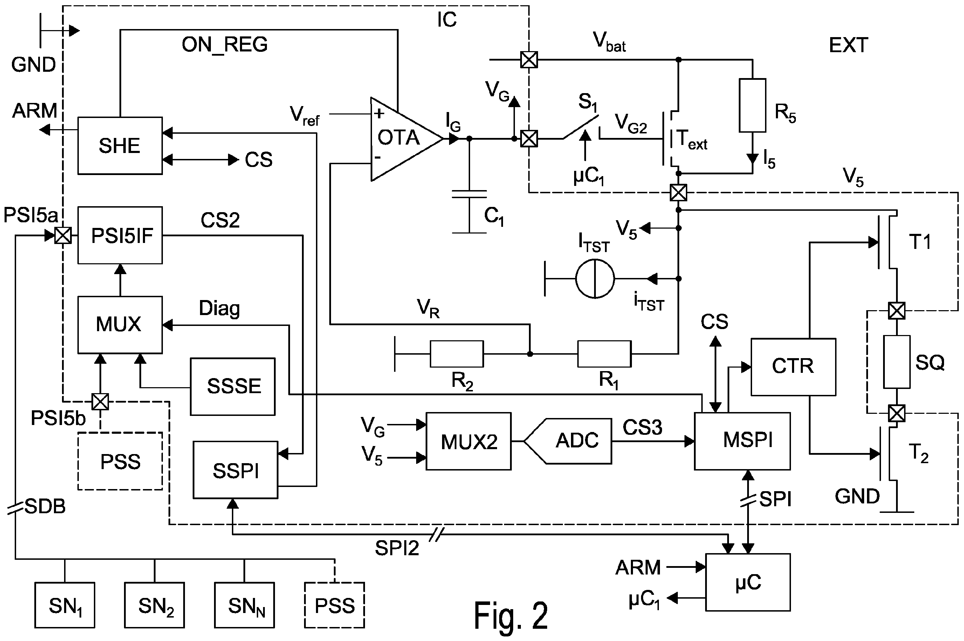

Anhand von Fig. 2 wird nachfolgend ein spezielleres Ausführungsbeispiel der Erfindung beschrieben. Die Energieversorgung EV weist in diesem weiteren Ausführungsbeispiel einen Regler mit einem Transkonduktanzverstärker OTA und einem mit dessen Ausgang verbundenen Kondensator C auf, während die Regelstrecke einen Sicherheitsschalter Tₑₓₜ in Form eines Transistors aufweist. Das Ausgangssignal des Transkonduktanzverstärkers OTA wird auf das Gate des Sicherheitsschalters Tₑₓₜ gegeben, wobei diese Verbindung durch den über den Mikrorechner µC steuerbaren ersten Schalter S1 geschlossen und unterbrochen werden kann. Zu Diagnosezwecken insbesondere der Spannung am Knoten V5 dient eine Teststromquelle I_{TST}, mit der sich ein Teststrom i_{TST} erzeugen lässt, was später noch beschrieben werden wird.

Es sei an dieser Stelle hervorgehoben, dass die Standards (Hardware und Software) der verschiedenen Busverbindungen, die von extern zu der mikroelektronischen Schaltung IC führen, grundsätzlich beliebig sein können. In der Praxis hat sich herausgestellt, dass die ersten und zweiten Datenbusse DB1, DB2 bevorzugt SPI-Standard aufweisen, während es sich zweckmäßigerweise bei dem Sensordatenbus SDB um einen PSI5-Standard handelt.

Die Elemente der erfindungsgemäßen Vorrichtung sind bevorzugt auf eine mikroelektronische Schaltung IC und auf einen Bereich EXT extern dieser Schaltung aufgeteilt. Die Grenze zwischen beiden ist in dem Ausführungsbeispiel der Fig. 2 gestrichelt dargestellt.

Die Vorrichtung dient in erster Linie der Funktionstüchtigkeitsüberprüfung einer für die Aktivierung eines Fahrzeuginsassenschutzsystems erforderlichen Komponente, bei der es sich z.B. um einen Sicherheitsschalter für die Energieversorgung ein und mehrerer Zündelemente eines Airbag-Systems handelt. Das oder die Zündelemente befinden sich im Außenraum EXT außerhalb der mikroelektronischen Schaltung IC befindet. Das Zündelement SQ dient dazu, den Sprengsatz für die Entfaltung des Airbags zu zünden.

Die Zündkette besteht aus einem in diesem Ausführungsbeispiel hinsichtlich seiner Funktionstüchtigkeit zu überwachenden externen Sicherheitsschalter Tₑₓₜ typischerweise in Form eines MOS-Transistors oder eines ähnlichen Halbleiterschalters, sowie einem ersten Zündtransistor T₁ und einem zweiten Zündtransistor T₂. Der externe Sicherheitsschalter Tₑₓₜ befindet sich typischerweise im Außenraum EXT. Der erste Zündtransistor T₁ und der zweite Zündtransistor T₂ sind typischerweise Teil der mikroelektronischen Schaltung IC. Das Zündelement SQ ist zwischen dem ersten Zündtransistor T₁ und dem zweiten Zündtransistor T₂ angeordnet, so dass beide durchschalten müssen, um das Zündelement SQ zu aktivieren und die Entfaltung des Airbag-Sackes zu initiieren.

Um die Gefahr einer unbeabsichtigten Zündung weiter zu reduzieren, ist der externe Sicherheitsschalter Tₑₓₜ zu der Serienschaltung aus erstem Zündtransistor T₁, Zündelement SQ und zweitem Zündtransistor T₂ ebenfalls in Serie geschaltet, so dass alle drei Transistoren T₁, T₂, Tₑₓₜ durchschalten müssen, um das Zündelement SQ zu aktivieren.

Die Kette aus Sicherheitsschalter Tₑₓₜ, erstem Zündtransistor T₁, Zündelement SQ und zweitem Zündtransistor T₂ ist typischerweise zwischen die Versorgungsspannungsleitung V_{bat}, die bevorzugt auf Versorgungsspannungspotenzial liegt, und Bezugsmasse GND geschaltet. Im Regelfall existieren mehrere derartige Zündpfade, bestehend aus zwei Zündtransistoren und einem Zündelement, wobei diese Reihenschaltungen parallel zueinander geschaltet sind.

Der Verbindungsknoten V₅ zwischen dem Sicherheitsschalter Tₑₓₜ und dem ersten Zündtransistor T₁ wird im Folgenden vereinfacht als V5-Potenzial V₅ bezeichnet.

Die Steuerelektroden des ersten Zündtransistors T₁ und des zweiten Zündtransistors T₂ werden von einem Ansteuerschaltkreis CTR gesteuert.

Ein fünfter Widerstand R₅ sorgt dafür, dass in einer Diagnosephase bei ausgeschaltetem Sicherheitsschalter Tₑₓₜ ein ausreichender, sehr geringer Strom I₅ aus der Versorgungsspannungsleitung V_{bat} durch einen ersten Spannungsteiler R₁, R₂ aus einem ersten Widerstand R₁ und einen zweiten Widerstand R₂ fließt. Dieser Spannungsteiler weist als Ausgang ein Rückführsignal auf (im Folgenden mit Regelsignal V_{R} bezeichnet), das das Signal (Spannung) am Knoten V₅ repräsentiert. Der negative Eingang eines Fehlerspannungsverstärkers, der hier als Regler für das V5-Potenzial V₅ dient und in diesem Ausführungsbeispiel als Transkonduktanzverstärker OTA ausgebildet ist, ist mit diesem Regelsignal V_{R} verbunden. Durch den fünften Widerstand R₅ wird sichergestellt, dass der Transkonduktanzverstärker OTA auch dann noch ein brauchbares Regelsignal V_{R} erhält, wenn der Sicherheitsschalter Tₑₓₜ geöffnet ist.

Der Transkonduktanzverstärker OTA liefert an seinem Ausgang V_{G} einen Ausgangsstrom I_{G}, der von der Differenz des Spannungswerts des Regelsignals V_{R}, das das Ausgangssignal des Spannungsteilers R₁, R₂ aus erstem Widerstand R₁ und zweiten Widerstand R₂ ist, und einer Referenzspannung V_{ref} abhängt. Mit dem so erzeugten Ausgangsstrom I_{G} des Transkonduktanzverstärkers OTA wird eine Speicherkapazität C₁ am Ausgang des Transkonduktanzverstärkers OTA geladen oder entladen. In dem Beispiel ist ein erster Anschluss der Speicherkapazität C₁ mit dem Ausgang des Transkonduktanzverstärkers OTA verbunden und der zweite Anschluss der Speicherkapazität C₁ mit einem Bezugspotenzial (hier GND). Ein erster Schalter S₁, der typischerweise ein MOS-Transistor o.dgl. ist, kann das Potenzial am ersten Anschluss der Speicherkapazität C₁ mit der Steuerelektrode des Sicherheitsschalters Tₑₓₜ verbinden. In der Regel weist der Sicherheitsschalter Tₑₓₜ eine parasitäre Gate-Source-Kapazität auf, die hier nicht eingezeichnet ist und die bei geöffnetem ersten Schalter S₁ die Gate-Source-Spannung des Sicherheitsschalters Tₑₓₜ für eine typischerweise ausreichende Zeit noch hält. Der erste Schalter S₁ wird in dem Beispiel der Fig. 2 durch einen Mikrorechner µC mittels eines Schaltersteuersignals µC₁ gesteuert. Der Ausgangsstrom I_{G} des Transkonduktanzverstärkers OTA kann durch eine Sicherheitseinheit SHE, allgemein als "Safety-Agent" bezeichnet, zusätzlich und bevorzugt höher priorisiert gesteuert werden. Bevorzugt kann die Sicherheitseinheit SHE über ein entsprechendes Ein/Aus-Signal ON_REG des Transkonduktanzverstärkers OTA den Ausgangsstrom I_{G} des Transkonduktanzverstärkers OTA in seinen Ausgangsknoten V_{G} hinein zwangsweise auf Null setzen und dadurch die Regelung des V5-Potenzials V₅ abschalten. Das Potenzial der Steuerelektrode des externen Sicherheitsschalters Tₑₓₜ bleibt typischerweise für eine gewisse Zeit noch erhalten, da dann die parasitäre Gate-Source-Kapazität des externen Sicherheitsschalters Tₑₓₜ zwischen der Steuerelektrode des externen Sicherheitsschalters Tₑₓₜ und dem Knoten V₅ mit V5-Potenzial zwischen dem Sicherheitsschalter Tₑₓₜ und dem ersten Zündtransistor T₁ die Gate-Source-Spannung für kurze Zeit noch aufrechterhält.

Die mikroelektronische Schaltung IC verfügt bevorzugt über zwei Datenbusschnittstellen, die in diesem Ausführungsbeispiel beispielhaft als SPI-Schnittstellen realisiert sind: eine erste SPI-Schnittstelle MSPI zur Verbindung mit einem externen ersten SPI-Bus SPI für die Steuerung und/oder Konfiguration von Komponenten innerhalb der mikroelektronischen Schaltung IC und eine zweite SPI-Schnittstelle (SSPI) zur Verbindung mit einem externen zweiten SPI-Bus SPI2 für die Steuerung von Sensorschnittstellen innerhalb der mikroelektronischen Schaltung IC und für die Abfrage von an dieser zweiten Schnittstelle anliegenden Sensordaten.

Der erste SPI-Bus SPI dient der Konfiguration der mikroelektronischen Schaltung IC sowie dem Lesen und Beschreiben der Register etc. und der Steuerung von Komponenten der mikroelektronischen Schaltung IC.

Der zweite SPI-Bus SPI2 dient der Kontrolle des Datenpfads der Sensoren exklusive der Sicherheitseinheit SHE (Safety-Agent). Die Sicherheitseinheit SHE (Safety-Agent) wird über einen ersten anderen Signalpfad CS, MSPI, SPI aus anderen Signalen CS, SPI und Baugruppen MSPI gesteuert als der zweite Signalpfad SPI2, SSPI, [CS2] oder [SPI2, SSPI, [SI3], SSSE, [Diag], MUX] der Sensoren. Die Sicherheitseinheit SHE (Safety-Agent) wird somit nur über die erste SPI-Schnittstelle MSPI gesteuert. Die Sicherheitseinheit SHE hört bevorzugt übrigens die Kommunikation nur auf dem zweiten SPI-Bus SSPI mit und vergleicht den vollständigen, physikalischen SPI-Datenrahmen (englisch: SPI-Frame) und/oder Datenrahmenabfolgen mit den vom der Sicherheitseinheit SHE ermittelten Erwartungswerten und/oder Erwartungswertabfolgen .

Über den ersten SPI-Bus SPI erfolgt die Konfiguration der Sicherheitseinheit SHE (und des Rests der Schaltung). Die Sicherheitseinheit SHE erhält in dem Fall nur die Weiterleitung von dekodierten Steuersignalen.

Ein außerhalb der mikroelektronischen Schaltung liegendes, Sensorsignale simulierendes Sensorsystem PSS mit einer PSI5-Sensoranbindung PSI5b ist über einen Multiplexer MUX mit der PSI5-Schnittstelle PSI5IF verbunden. Die PSI5-Schnittstelle PSI5IF verfügt typischerweise über mehrere PSI5-Sensoranbindemöglichkeiten. In dem beispielhaften Fall der Fig. 2 sind dies eine erste PSI5-Sensoranbindung PSI5a und eine zweite PSI5-Sensoranbindung PSI5b. Es können auch weitere Sensoranbindungen vorgesehen werden. All diese PSI5-Sensoranbindungen sind Teil eines Sensorbussystems, dessen Protokoll und Hardware für die Erfindung sekundär sind. Mittels eines Multiplexers MUX kann das PSI5-Signal PSI5b des PSI5-Sensors PSS durch ein synthetisiertes Testsignal aus einer diesen Sensor (bzw. diese Sensoren) simulierenden Sensorsignal-Simulationseinheit SSSE ersetzt werden, der in dem Beispiel der Fig. 2 den Multiplexer MUX mittels eines Umschaltsignals Diag steuert. Die Sensorsignal-Simulationseinheit SSSE wird in dem Beispiel der Fig. 2 über den zweiten SPI-Bus SPI2, PSI5d und die zweite SPI-Schnittstelle SSPI gesteuert. Auf diese Weise kann der Mikrorechner µC vorgegebene Testfälle simulieren und die Reaktion des Systems innerhalb der mikroelektronischen Schaltung IC überprüfen.

Die Sicherheitseinheit SHE sendet beispielsweise bei Vorliegen vordefinierter Randbedingungen bei der Überprüfung der PSI5-Schnittstelle ein ARM-Signal ARM an den Mikrorechner µC, was diesen dann zu vorbestimmten Reaktionen veranlasst.

Die Sicherheitseinheit SHE lässt eine Regelung des Potenzials an der Steuerelektrode des Sicherheitsschalters Tₑₓₜ durch den Transkonduktanzverstärker OTA über das Ein/Aus-Signal ON_REG des Transkonduktanzverstärkers OTA nur unter vorbestimmten Bedingungen zu.

Über ein drittes Ansteuersignal CS3 kann der Mikrorechner µC über den ersten SPI-Bus SPI und die erste SPI-Schnittstelle MSPI einen Analog-zu-Digitalwandler ADC steuern und typischerweise dessen Messwerte auslesen. Der Analog-zu-Digitalwandler ADC kann mittels eines zweiten Multiplexers MUX2 verschiedene Knoten innerhalb der mikroelektronischen Schaltung IC vermessen. Insbesondere wird vorgeschlagen, den Ausgang V_{G} des Transkonduktanzverstärkers OTA und den Knoten V₅ zwischen dem Sicherheitsschalter Tₑₓₜ und dem ersten Zündtransistor T₁ mit V5-Potenzial auf diese Weise für den Mikrorechner messbar zu machen.

Mit dem im Folgenden vorgeschlagenen Verfahren kann nun überprüft werden, ob der externe Sicherheitsschalter Tₑₓₜ seine Funktion ausführen kann.

Als erste Möglichkeit einer solchen Überprüfung wird ein Verfahren mit folgenden Schritten vorgeschlagen:
- Messung des Potenzials am Ausgang V_{G} des Transkonduktanzverstärkers OTA über den Analog-zu-Digitalwandler ADC;
- Messung des V5-Potenzials am Knoten V₅ zwischen dem Sicherheitsschalter Tₑₓₜ und dem ersten Zündtransistor T₁ über den Analog-zu-Digitalwandler ADC;
- Öffnen des ersten Schalters S₁. Hierdurch beginnt der Sicherheitsschalter Tₑₓₜ zu floaten. D.h., dass seine Anschlüsse den Bewegungen des V5-Potenzials am Knoten V₅ zwischen dem Sicherheitsschalter Tₑₓₜ und dem ersten Zündtransistor T₁ folgen;
- Einspeisen eines Teststroms i_{TST} mittels einer Teststromquelle I_{TST} in den Knoten V₅ zwischen dem Sicherheitsschalter Tₑₓₜ und dem ersten Zündtransistor T₁. Hierdurch verschiebt sich das V5 Potenzial des Knotens V₅ zwischen dem Sicherheitsschalter Tₑₓₜ und dem ersten Zündtransistor T₁;
- Messung des V5-Potenzials am Knoten V₅ zwischen dem Sicherheitsschalter Tₑₓₜ und dem ersten Zündtransistor T₁ über den Analog-zu-Digitalwandler ADC und Ermittlung eines zugehörigen ersten V5-Spannungswertes;
- Messung des Potenzials am Ausgang V_{G} des Transkonduktanzverstärkers OTA über den Analog-zu-Digitalwandler ADC und Ermittlung eines ersten zugehörigen Regelspannungswertes;
- Vergleich des Betrags des ersten V5-Spannungswertes mit dem Betrag des ersten Regelspannungswertes und Ermittlung eines ersten Vergleichsergebnisses;
- Schließen auf einen Fehler, wenn der Betrag des ersten V5-Spannungswertes über dem Betrag des ersten Regelspannungswertes liegt; (Liegt die Reglerspannung, also der erste Regelspannungswert, beispielsweise bei 21,7 V, so können je nach Konstruktion beispielsweise 19 V für das V5-Potenzial in diesem Schaltzustand erwartet werden.)
- Schließen des ersten Schalters S₁;
- ggf. Abwarten einer Verzögerungszeit T zur Einregelung des V5-Potenzials durch den Transkonduktanzverstärker OTA;
- Messung des V5-Potenzials am Knoten V₅ zwischen dem Sicherheitsschalter Tₑₓₜ und dem ersten Zündtransistor T₁ über den Analog-zu-Digitalwandler ADC und Ermittlung eines zugehörigen zweiten V5-Spannungswertes;
- Messung des Potenzials am Ausgang V_{G} des Transkonduktanzverstärkers OTA über den Analog-zu-Digitalwandler ADC und Ermittlung eines zweiten zugehörigen Regelspannungswertes;
- Vergleich des Betrags des zweiten V5-Spannungswertes am Knoten V₅ zwischen dem Sicherheitsschalter Tₑₓₜ und dem ersten Zündtransistor T₁ gegen Bezugsmasse GND mit dem Betrag des zweiten Regelspannungswertes und Ermittlung eines zweiten Vergleichsergebnisses;
- Schließen auf einen Fehler, wenn der Betrag des zweiten V5-Spannungswertes von dem Betrag des zweiten Regelspannungswertes um mehr als +/-1% und/oder mehr als +/-2% und/oder mehr als +/-5% und/oder mehr als +/-10% und/oder mehr als +/-25% abweicht. Der Toleranzbereich sollte in der Konstruktionsphase den jeweiligen Bedingungen der Anwendung angepasst werden. Dies kann beispielsweise durch Simulation kritischer Fälle geschehen. Mittels des Analog-zu-Digital-Wandlers ADC überprüft dann der Mikrorechner µC, ob beispielsweise das Potenzial am Knoten V₅ gegen Bezugsmasse GND auf einen Zielwert von z.B. 21,7 V geregelt wurde.

Die Sicherheitseinheit (SHE) (Safety-Agent) hört in der allgemeinsten Variante die SPI-Kommunikation zwischen dem Mikrorechner µC und der mikroelektronischen Schaltung IC auf den SPI-Bussen SPI, SPI2 mit. In der bevorzugten Implementierung hört jedoch die Sicherheitseinheit SHE (Safety-Agent) die SPI-Kommunikation zwischen dem Mikrorechner µC und der mikroelektronischen Schaltung IC vor allem auf dem zweiten SPI-Bus SPI2 mit. Die entsprechenden Verbindungen sind in Fig. 2 nicht eingezeichnet. Die Entscheidungen werden durch die Sicherheitseinheit SHE (Safety-Agent) in analoger Weise und unabhängig vom übrigen Schaltkreis mitvollzogen, wodurch die Sicherheitseinheit SHE (Safety-Agent) in die Lage versetzt ist, Erwartungswerte und Erwartungswertfolgen zu ermitteln und diese mit dem Geschehen in der integrierten Schaltung zu vergleichen. Ein Testzustand muss speziell aktiviert werden, damit die Sicherheitseinheit SHE eine fehlerhafte Auslösung durch einen Selbsttest verhindert.

Der Vorteil durch die Simulation von Sensorsignalen mittels der internen Sensorsignal-Simulationseinheit SSSE statt durch ein externes "virtuelles" Sensorsystem PSS ist, dass der Schaltkreis ohne von extern angeschlossenem Sensorsystem PSS oder externe Komponenten geprüft werden kann, ohne die Sicherheitsanforderungen zu verletzen.

In diesem Zusammenhang sei auf die deutschen Patentanmeldungen DE 10 2018 107 451.4 und DE 10 2018 107 455.7 sowie auf die Schriften DE 10 2018 107 449 B4, DE 10 2018 107 452 B4, DE 10 2018 107 438 A1, DE 10 2018 107 441 A1, DE 10 2018 107 446 A1 und DE 10 2018 107 448 A1 verwiesen, deren Inhalte hiermit durch Bezugnahme zum Gegenstand der vorliegenden Anmeldung gehören.

Die hier vorgestellte Erfindung erlaubt die Simulation von zulässigem und von fehlerhaftem Sensorverhalten durch eine Emulation von Sensorschnittstellen, Sensorsignalen und Sensordaten durch die IC-interne Sensorsignal-Simulationseinheit SSSE. Für den Fall der Überprüfung der Energieversorgung EV kann z.B. der Ausgang des Transkonduktanzverstärkers OTA im Betrieb bewertet werden, ohne dass es zu einer Zündung der Zündvorrichtung SQ kommen kann. Des Weiteren ist gleichzeitig eine sichere Funktionsüberprüfung des Sicherheitsschalters Tₑₓₜ im Betrieb möglich. Da zwei unterschiedliche Datenpfade genutzt werden, kann der Wirkpfad komplett überprüft werden, ohne eine versehentliche Auslösung durch einen Einzelfehler im Schaltkreis zu verursachen.

Basis der Erfindung ist eine Vorrichtung zur Zündung einer Zündpille SQ, wobei diese Vorrichtung zur Durchführung des später beschriebenen Verfahrens zur Funktionsüberprüfung eines Sicherheitsschalters Tₑₓₜ vorgesehen und geeignet ist. Es handelt sich um eine Vorrichtung mit einer mikroelektronischen Schaltung IC, mit einem Zündelement SQ, mit einem ersten Zündtransistor T₁, mit einem zweiten Zündtransistor T₂, mit einem Sicherheitsschalter Tₑₓₜ, der einen Steuereingang V_{G2} aufweist, mit einem fünften Widerstand R₅, mit einem Knoten V₅, mit einer Versorgungsspannungsleitung V_{bat} und mit einer Bezugsmasse GND. Die Versorgungsspannungsleitung V_{bat} und die Bezugsmasse GND versorgen die Vorrichtung mit elektrischer Energie. Der fünfte Widerstand R₅ kann Teil der mikroelektronischen Schaltung IC sein oder auch nicht. Die mikroelektronische Schaltung umfasst typischerweise einen Transkonduktanzverstärker (OTA) mit einem Ausgang V_{G}, ein Regelsignal V_{R}, ein Regelsignalerzeugungsnetzwerk R₁, R₂, das bevorzugt ein erster Spannungsteiler aus einem ersten Widerstand R₁ und einem zweiten Widerstand R₂ mit dem Regelsignal V_{R} als seinem Ausgang ist, eine Speicherkapazität C₁, einen ersten Schalter S₁, eine Referenzspannung V_{ref}, eine Teststromquelle I_{TST}, einen Knoten V₅ und Mittel ADC, MUX2 zum Erfassen des Potenzials am Knoten V₅ und zum Erfassen des Potenzials am Ausgang V_{G} des Transkonduktanzverstärkers OTA. Bei den Mitteln zum Erfassen des Potenzials am Knoten V₅ und zum Erfassen des Potenzials am Ausgang V_{G} des Transkonduktanzverstärkers OTA handelt es sich bevorzugt um einen Analog-zu-Digital-Wandler ADC, der über einen Multiplexer MUX2 verschiedene Potenziale innerhalb der mikroelektronischen Schaltung IC erfassen kann und der durch einen externen Mikrorechner µC gesteuert und ausgelesen werden kann. Der Sicherheitsschalter Tₑₓₜ und der erste Zündtransistor T₁ und das Zündelement SQ und der zweite Zündtransistor T₂ sind in Serie geschaltet. Das Zündelement SQ ist dabei zwischen dem ersten Zündtransistor T₁ und dem zweiten Zündtransistor T₂ geschaltet. Der Sicherheitsschalter Tₑₓₜ und der erste Zündtransistor T₁ sind über einen gemeinsamen Knoten V₅ miteinander verbunden. Das Zündelement S) befindet sich bevorzugt außerhalb der mikroelektronischen Schaltung IC. Der Sicherheitsschalter Tₑₓₜ befindet sich bevorzugt außerhalb der mikroelektronischen Schaltung IC. Der erste Zündtransistor T₁ ist Teil der mikroelektronischen Schaltung IC. Der zweite Zündtransistor T₂ ist Teil der mikroelektronischen Schaltung IC. Der Sicherheitsschalter Tₑₓₜ und das Zündelement SQ und der erste Zündtransistor T₁ und der zweite Zündtransistor T₂ sind in einem gemeinsamen Zündstrompfad seriell hintereinander angeordnet. Das Zündelement SQ ist in dem gemeinsamen Zündstrompfad zwischen dem ersten Zündtransistor T₁ und dem zweiten Zündtransistor T₂ angeordnet. Für eine Zündung des Zündelements SQ müssen der Sicherheitsschalter Tₑₓₜ und der erste Zündtransistor T₁ und der zweite Zündtransistor T₂ gleichzeitig eingeschaltet, d.h. leitend geschaltet, sein. Der Sicherheitsschalter Tₑₓₜ und der erste Zündtransistor T₁ und das Zündelement SQ und der zweite Zündtransistor T₂ bilden eine Zündkette. Hierbei bezieht sich der Begriff Zündkette auf die serielle Verschaltung. Diese Zündkette ist zwischen die Versorgungsspannungsleitung V_{bat} und Bezugsmasse GND geschaltet. Der Knoten (V₅) befindet sich dabei zwischen dem Sicherheitsschalter Tₑₓₜ und dem ersten Zündtransistor T₁. Der fünfte Widerstand R₅ speist in den Knoten V₅ bei einem ausgeschalteten ersten Sicherheitsschalter Tₑₓₜ einen elektrischen Strom I₅ ein, was die Arbeitsfähigkeit des Regelsignalerzeugungsnetzwerks R₁, R₂ in diesem Zustand sichert. Das Regelsignalerzeugungsnetzwerk R₁, R₂ bildet in Abhängigkeit von der Spannung zwischen dem Knoten V₅ und dem Bezugspotenzial GND das Regelsignal V_{R}. Dieses Regelsignal V_{R} ist ein erstes Eingangssignal des Transkonduktanzverstärkers OTA. Die Referenzspannung V_{ref} ist ein zweites Eingangssignal des Transkonduktanzverstärkers OTA. Die Speicherkapazität C₁ ist mit ihrem ersten Anschluss mit dem Ausgang (V_{G}) des Transkonduktanzverstärkers OTA verbunden und integriert den Ausgangsstrom I_{G} des Transkonduktanzverstärkers OTA abzüglich der Leckströme auf. Bei der Speicherkapazität C₁ kann es sich auch um ein Netzwerk von Bauelementen mit kapazitiver oder integrierender Wirkung handeln das zumindest zeitweise sich funktionsähnlich zu einer idealen Kapazität verhält. Der erste Schalter S₁ ist dazu geeignet und/oder vorgesehen, den Ausgang V_{G} des Transkonduktanzverstärkers OTA mit dem Steuereingang des Sicherheitsschalters Tₑₓₜ zu verbinden. Die Teststromquelle I_{TST} kann vorzugsweise veranlasst durch eine Steuerung CTR oder einen externen Mikrorechner µC einen Teststrom i_{TST} in den Knoten V₅ einspeisen.

Neben diesen Merkmalen umfasst die Erfindung auch eine Strukturierung der Datenkommunikation, die notwendig ist, um eine Aktivierung wegen eines Datenfehlers zu verhindern. Diese Strukturierung hat allgemeineren Charakter. Diese Teilerfindung betrifft eine sicherheitsrelevante Vorrichtung für die Verwendung in Fahrzeugen, insbesondere ein Airbag-Zündsystem mit einem Mikrorechner µC, einer mikroelektronischen Schaltung IC, einer ersten Datenschnittstelle, insbesondere mit einer ersten SPI-Schnittstelle (SPI, einer zweiten Datenschnittstelle, insbesondere mit einer zweiten SPI-Schnittstelle SSPI, einer Sicherheitseinheit (Safety-Agent) SHE, zur Überwachung von Vorrichtungsfunktionen, mit einer Sensorschnittstelle, insbesondere einer PSI5 Sensoranbindung PSI5b, und mit einer Sensorsignal-Simulationseinheit SSSE, der einen Sensor PSS simulieren kann. Die Sicherheitseinheit (Safety-Agent) (HE wird über die erste Datenschnittstelle (MSPI) durch den Mikrorechner µC gesteuert. Die Sensorsignal-Simulationseinheit SSSE und die Sensorschnittstelle PSI5B und die Umschaltung zwischen diesen wird über die zweite Datenschnittstelle SSPI durch den Mikrorechner µC gesteuert. In einer weiteren Ausprägung dieser Teilerfindung kann die Sicherheitseinheit (Safety-Agent) SHE das Ausgangssignal am Ausgang V_{G} des Transkonduktanzverstärkers OTA) beeinflussen. Hierdurch kann die Sicherheitseinheit SHE bei einem Test des Systems eine fehlerhafte Zündung ausschließen.

Die Erfindung umfasst des Weiteren ein erfindungsgemäßes Verfahren zur Überprüfung der Funktionstüchtigkeit eines Sicherheitsschalters Tₑₓₜ in einem Airbag-Zündsystem. Hierfür muss das Airbag-Zündsystem einen Sicherheitsschalter Tₑₓₜ mit einer Steuerelektrode V_{G2}, einen ersten Zündtransistor T₁, einen zweiten Zündtransistor T₂, ein Zündelement SQ, einen Transkonduktanzverstärker OTA mit einem Ausgang V_{G} und einen ersten Schalter S₁ umfassen.

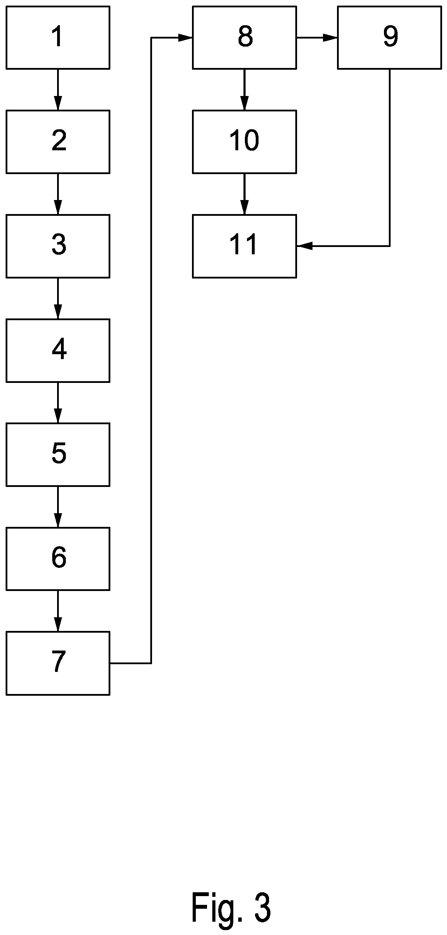

Der erste Schalter S₁ kann den Ausgang V_{G} des Transkonduktanzverstärkers OTA mit der Steuerelektrode V_{G2} des Sicherheitsschalters Tₑₓₜ elektrisch verbinden und eine solche Verbindung trennen. Der Sicherheitsschalter Tₑₓₜ und der erste Zündtransistor T₁ und das Zündelement SQ und der zweite Zündtransistor T₂ sind in Serie geschaltet. Das Zündelement SQ ist zwischen dem ersten Zündtransistor T₁ und dem zweiten Zündtransistor T₂ geschaltet. Der Sicherheitsschalter Tₑₓₜ und der erste Zündtransistor T₁ sind über einen gemeinsamen Knoten V₅ miteinander verbunden. Das Verfahren (siehe beispielhaft Fig. 3) umfasst zumindest die Schritte:
- (1) Start
- (2) Messung des Potenzials am Ausgang V_{G};
- (3) Messung des V5-Potenzials des Knotens V5;
- (4) Öffnen des ersten Schalters S₁;
- (5) Einspeisen eines zusätzlichen Teststroms i_{TST} in den Knoten V5;
- (6) Messung des V5-Potenzials am Knoten V5 und Ermittlung eines zugehörigen ersten V5-Spannungswertes;
- (7) Messung des Potenzials am Ausgang VG des Transkonduktanzverstärkers OTA und Ermittlung eines ersten zugehörigen Regelspannungswertes;
- (8) Vergleich des Betrags des ersten V5-Spannungswertes mit dem Betrag des ersten Regelspannungswertes und Ermittlung eines ersten Vergleichsergebnisses;
- (9) Schließen auf einen Fehler, wenn der Betrag des ersten V5-Spannungswertes über dem Betrag des ersten Regelspannungswertes liegt.
- (10) Schließen auf eine Fehlerfreiheit, wenn der Betrag des ersten V5-Spannungswertes unter dem Betrag des ersten Regelspannungswertes liegt oder um nicht mehr als ein vorgegebener Toleranzwert von dem Betrag des ersten Regelspannungswertes abweicht, was im Sinne dieser Offenlegung noch als ein unter dem Betrag des ersten Regelspannungswertes liegen bewertet wird.
- (11) Ende.

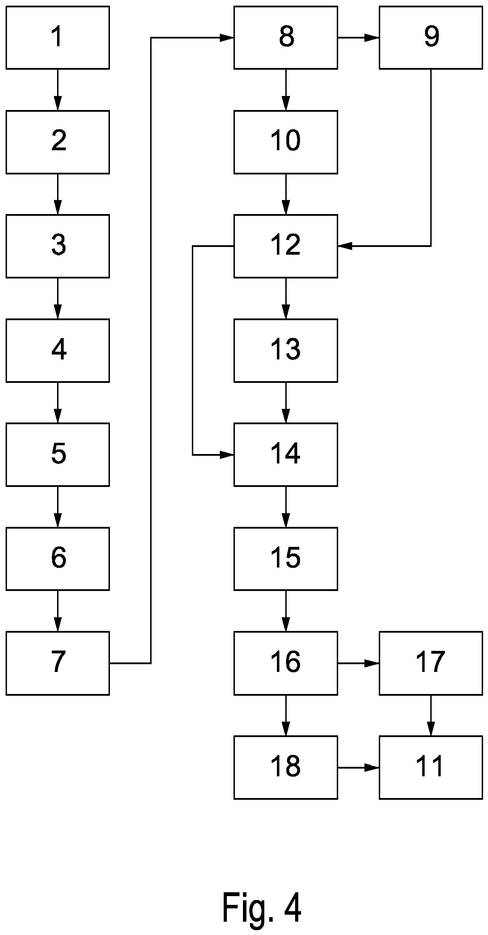

Ein verfeinertes Verfahren (siehe beispielhaft Fig. 4), das auf dem unmittelbar zuvor beschriebenen Verfahren basiert, umfasst die zusätzlichen Schritte:
- (12) Schließen des ersten Schalters S₁;
- (13) Optionales Abwarten einer Verzögerungszeit T zur Einregelung des V5-Potenzials durch den Transkonduktanzverstärker OTA;
- (14) Messung des V5-Potenzials am Knoten V5 und Ermittlung eines zugehörigen zweiten V5-Spannungswertes;
- (15) Messung des Potenzials am Ausgang VG des Transkonduktanzverstärkers OTA und Ermittlung eines zweiten zugehörigen Regelspannungswertes;
- (16) Vergleich des Betrags des zweiten V5-Spannungswertes mit dem Betrag des zweiten Regelspannungswertes und Ermittlung eines zweiten Vergleichsergebnisses;
- (17) Schließen auf einen Fehler, wenn der Betrag des zweiten V5-Spannungswertes von dem Betrag des zweiten Regelspannungswertes um mehr als +/-1% und/oder mehr als +/-2% und/oder mehr als +/-5% und/oder mehr als +/-10% und/oder mehr als +/-25% abweicht.
- (18) Schließen auf eine Fehlerfreiheit, wenn der Betrag des zweiten V5-Spannungswertes von dem Betrag des zweiten Regelspannungswertes um nicht mehr als +/-1% und/oder mehr als +/-2% und/oder mehr als +/-5% und/oder mehr als +/-10% und/oder mehr als +/-25% abweicht.
- (11) Ende.

Die Erfindung betrifft in weiterer Ausprägung ein Verfahren zur Zündung einer Zündpille, welches zunächst durch einige technische Merkmale charakterisiert ist.

Dabei finden sich in einer ersten Variante ein erster und ein zweiter Zündtransistor T₁; T₂, ein Sicherheitsschalter Tₑₓₜ, ein Transkonduktanzverstärker OTA und ein Widerstand R₅ wieder. Der Transkonduktanzverstärker OTA weist beispielsweise zusätzlich einen Ausgang V_{G} auf, der Sicherheitsschalter Tₑₓₜ weist eine Steuerelektrode auf und ist in Serie geschaltet mit dem ersten Zündtransistor T₁ und dem zweiten Zündtransistor T₂ und dem Zündelement SQ, wobei die Verbindung zwischen dem Sicherheitsschalter Tₑₓₜ und dem ersten Zündtransistor T₁ über einen Knoten V₅ erfolgt.

Zusätzlich ist der Widerstand R₅ zwischen das Versorgungspotenzial und den Knoten V₅ geschaltet.

Somit kann nach durch Öffnen des ersten Schalters S1 erfolgendem Isolieren der Steuerelektrode des Sicherheitsschalters Tₑₓₜ gegenüber dem Ausgang V_{G} und dem anschließenden Einspeisen eines Teststroms i_{TST} in den Knoten V₅ eine Messung des Potenzials am Ausgang V_{G} des Transkonduktanzverstärkers OTA erfolgen, die zur Folge hat, dass ein erster Regelspannungswert ermittelt wird.

Die Messung eines V5-Potenzials am Knoten V₅ liefert dann einen ersten V5-Spannungswert. Daraufhin wird die Steuerelektrode des Sicherheitsschalters Tₑₓₜ mit dem Ausgang V_{G} verbunden.

Als nächstes erfolgt wiederum eine Messung des V5-Potenzials am Knoten V₅, welche die Ermittlung eines zweiten V5-Spannungswertes zur Folge hat. Zusätzlich findet eine Messung des Potenzials am Ausgang V_{G} des Transkonduktanzverstärkers OTA statt. Durch diese wird wiederum ein zweiter Regelspannungswert ermittelt.

Es wird immer dann auf einen Fehler geschlossen, wenn der Betrag des ersten V5-Spannungswertes über dem Betrag des ersten Regelspannungswerks liegt. Es wird auch dann auf einen Fehler geschlossen, wenn nach Ermittlung eines Vergleichsergebnisses zwischen dem zweiten V5-Spannungswert und dem zweiten Regelspannungswert eine Abweichung von mehr als +/-1% und/oder mehr als +/-2% und/oder mehr als +/-5% und/oder mehr als +/-10% und/oder mehr als +/-25% auftritt.

In einer zweiten Variante der weiteren Ausprägung der Erfindung umfasst diese einen ersten und einen zweiten Zündtransistor T₁, T₂, einen Sicherheitsschalter Tₑₓₜ, einen Transkonduktanzverstärker OTA und einen Widerstand R₅. Der Transkonduktanzverstärker OTA weist hierbei zusätzlich einen Ausgang V_{G} auf, der Sicherheitsschalter Tₑₓₜ weist eine Steuerelektrode auf und ist in Serie geschaltet mit dem ersten Zündtransistor T₁ und dem zweiten Zündtransistor T₂ und dem Zündelement SQ, wobei die Verbindung zwischen dem Sicherheitsschalter (Tₑₓₜ) und dem ersten Zündtransistor T₁ über einen Knoten V₅ erfolgt.

Zusätzlich ist der Widerstand R₅ zwischen das Versorgungspotenzial und den Knoten V₅ geschaltet.

Nach Isolieren der Steuerelektrode des Sicherheitsschalters Tₑₓₜ gegenüber dem Ausgang V_{G} und dem anschließenden Einspeisen eines Teststroms i_{TST} in den Knoten V₅ erfolgt eine Messung des Potenzials am Ausgang V_{G} des Transkonduktanzverstärkers OTA und die Ermittlung eines ersten Regelspannungswerts.

Die Messung eines V5-Potenzials am Knoten V₅ liefert dann einen ersten V5-Spannungswert. Es wird immer dann auf einen Fehler geschlossen, wenn der Betrag des ersten V5-Spannungswertes über dem Betrag des ersten Regelspannungswerks liegt.

In einer dritten Variante der zusätzlichen Ausprägung der Erfindung umfasst diese einen ersten und einen zweiten Zündtransistor T₁, T₂, einen Sicherheitsschalter Tₑₓₜ, einen Transkonduktanzverstärker OTA und einen Widerstand R₅ vorhanden sind. Der Transkonduktanzverstärker OTA weist hierbei zusätzlich einen Ausgang V_{G} auf, der Sicherheitsschalter Tₑₓₜ weist eine Steuerelektrode auf und ist in Serie geschaltet mit dem ersten Zündtransistor T₁ und dem zweiten Zündtransistor T₂ und dem Zündelement SQ, wobei die Verbindung zwischen dem Sicherheitsschalter Tₑₓₜ und dem ersten Zündtransistor T₁ über einen Knoten V₅ erfolgt.

Zusätzlich ist der Widerstand R₅ zwischen das Versorgungspotenzial und den Knoten V₅ geschaltet.

Hierbei wird die Steuerelektrode des Sicherheitsschalters Tₑₓₜ mit dem Ausgang V_{G} verbunden.

Als nächstes erfolgt eine Messung des V5-Potenzials am Knoten V₅ welche die Ermittlung eines zweiten V5-Spannungswertes zur Folge hat. Zusätzlich findet eine Messung des Potenzials am Ausgang V_{G} des Transkonduktanzverstärkers OTA statt. Durch diese wird wiederum ein zweiter Regelspannungswert ermittelt.

Es wird immer dann auf einen Fehler geschlossen, wenn der Betrag des ersten V5-Spannungswertes über dem Betrag des ersten Regelspannungswerts liegt. Es wird auch dann auf einen Fehler geschlossen, wenn nach Ermittlung eines Vergleichsergebnisses zwischen dem zweiten V5-Spannungswert und dem zweiten Reglerspannungswert eine Abweichung von mehr als +/-1% und/oder mehr als +/-2% und/oder mehr als +/-5% und/oder mehr als +/-10% und/oder mehr als +/-25% auftritt.

### BEZUGSZEICHENLISTE

- 1: Verfahrensschritt 1: Start
- 2: Verfahrensschritt 2: Messung des Potenzials am Ausgang V_{G}
- 3: Verfahrensschritt 3: Messung des V5-Potenzials des Knotens V5
- 4: Verfahrensschritt 4: Öffnen des ersten Schalters S₁
- 5: Verfahrensschritt 5: Einspeisen eines zusätzlichen Teststroms i_{TST} in den Knoten V5
- 6: Verfahrensschritt 6: Messung des V5-Potenzials am Knoten V5 und Ermittlung eines zugehörigen ersten V5-Spannungswertes
- 7: Verfahrensschritt 7: Messung des Potenzials am Ausgang VG des Transkonduktanzverstärkers OTA und Ermittlung eines ersten zugehörigen Regelspannungswertes
- 8: Verfahrensschritt 8: Vergleich des Betrags des ersten V5-Spannungswertes mit dem Betrag des ersten Regelspannungswertes und Ermittlung eines ersten Vergleichsergebnisses
- 9: Verfahrensschritt 9: Schließen auf einen Fehler, wenn der Betrag des ersten V5-Spannungswertes über dem Betrag des ersten Regelspannungswertes liegt
- 10: Verfahrensschritt 10: Schließen auf eine Fehlerfreiheit, wenn der Betrag des ersten V5-Spannungswertes unter dem Betrag des ersten Regelspannungswertes liegt oder um nicht mehr als ein vorgegebener Toleranzwert von dem Betrag des ersten Regelspannungswertes abweicht, was im Sinne dieser Offenlegung noch als ein unter dem Betrag des ersten Regelspannungswertes liegen bewertet wird
- 11: Verfahrensschritt 11: Ende
- 12: Verfahrensschritt 12: Schließen des ersten Schalters S₁
- 13: Verfahrensschritt 13: Optionales Abwarten einer Verzögerungszeit T zur Einregelung des V5-Potenzials durch den Transkonduktanzverstärker OTA
- 14: Verfahrensschritt 14: Messung des V5-Potenzials am Knoten V5 und Ermittlung eines zugehörigen zweiten V5-Spannungswertes
- 15: Verfahrensschritt 15: Messung des Potenzials am Ausgang VG des Transkonduktanzverstärkers OT und Ermittlung eines zweiten zugehörigen Regelspannungswertes
- 16: Verfahrensschritt 16: Vergleich des Betrags des zweiten V5-Spannungswertes mit dem Betrag des zweiten Regelspannungswertes und Ermittlung eines zweiten Vergleichsergebnisses
- 17: Verfahrensschritt 17: Schließen auf einen Fehler, wenn der Betrag des zweiten V5-Spannungswertes von dem Betrag des zweiten Regelspannungswertes um mehr als +/-1% und/oder mehr als +/-2% und/oder mehr als +/-5% und/oder mehr als +/-10% und/oder mehr als +/-25% abweicht
- 18: Verfahrensschritt 18: Schließen auf eine Fehlerfreiheit, wenn der Betrag des zweiten V5-Spannungswertes von dem Betrag des zweiten Regelspannungswertes um nicht mehr als +/-1% und/oder mehr als +/-2% und/oder mehr als +/-5% und/oder mehr als +/-10% und/oder mehr als +/-25% abweicht
- ADC: Analog-zu-Digital-Wandler
- ARM: Arm-Signal der Sicherheitseinheit an den Mikrorechner µC
- C₁: Speicherkapazität
- CS: erstes Ansteuersignal zur Steuerung der Sicherheitseinheit SHE über die erste SPI-Schnittstelle MSPI und den ersten SPI-Bus SPI durch den Mikrorechner µC
- CS2: zweites Ansteuersignal zur Steuerung der PSI5-Schnittstelle PSI5IF über die zweite SPI-Schnittstelle SSPI und den zweiten SPI-Bus SPI2 durch den Mikrorechner µC
- CS3: drittes Ansteuersignal zur Steuerung des Analog-zu-Digital-Wandlers ADC über die erste SPI-Schnittstelle MSPI und den ersten SPI-Bus SPI durch den Mikrorechner µC
- CTR: Ansteuerschaltkreis
- DB1: erster Datenbus
- DB2: zweiter Datenbus
- Diag: Multiplexer-Umschaltsignal
- DIAGN: Diagnoseschaltkreis
- EV: Energieversorgungseinheit
- EXT: Bereich der Vorrichtung außerhalb der mikroelektronischen Schaltung

- GND: Bezugsmasse
- I₅: Strom durch den fünften Widerstand R₅
- IC: mikroelektronische Schaltung
- I_{G}: Ausgangsstrom des Transkonduktanzverstärkers OTA
- I_{TST}: Teststromquelle
- I_{TST}: Teststrom der Teststromquelle I_{TST}
- µC: Mikrorechner
- µC1: Steuerleitung mit der der Mikrorechner µC den ersten Schalter S₁ steuert
- MSPI: erste SPI-Schnittstelle am ersten SPI-Bus SPI, die hier beispielhaft den Nicht-Sensor-Teil der mikroelektronischen Schaltung IC mit dem Mikrorechner µC verbindet und durch diesen steuerbar macht
- MUX: Multiplexer
- ON_REG: Ein-/Aus-Signal für den Transkonduktanzverstärker;
- OTA: Transkonduktanzverstärker. Der Transkonduktanzverstärker liefert im eingeschalteten Zustand einen Ausgangsstrom I_{G}, der proportional zur Spannungsdifferenz an seinen beiden Eingängen +,- ist. Über ein Ein-Aus-Signal ON_REG kann der Transkonduktanzverstärker ein- und ausgeschaltet werden. Der Transkonduktanzverstärker liefert im ausgeschalteten Zustand einen Ausgangsstrom I_{G}, der im Wesentlichen bis auf parasitäre Ströme null ist
- PSI5a: erste PSI5 Sensoranbindung
- PSI5b: zweite PSI5 Sensoranbindung
- PSI5IF: PSI5-Schnittstelle
- PSS: PSI5-Sensor-System
- R₁: erster Widerstand, der Teil des ersten Spannungsteilers R₁, R₂ ist
- R₂: zweiter Widerstand, der Teil des ersten Spannungsteilers R₁, R₂ ist
- R₃: dritter Widerstand
- R₄: vierter Widerstand
- R₅: fünfter Widerstand
- RE: Regler
- RS: Regelstrecke
- S₁: erster Schalter. Der erste Schalter wird durch den beispielhaft in Fig. 2 eingezeichneten Mikrorechner µC über eine zugehörige Steuerleitung µC₁ gesteuert
- SDB: Sensordatenbus
- SHE: Sicherheitseinheit (Safety-Agent)
- SN1: Sensor
- SN2: Sensor
- SNN: Sensor
- SPI: erste SPI-Bus. Statt eines SPI-Busses können auch andere Datenbusstandards verwendet werden
- SPI2: zweiter SPI-Bus. Statt eines SPI-Busses können auch andere Datenbusstandards wie beispielsweise UART verwendet werden
- SSPI: zweite SPI-Schnittstelle am zweiten SPI-Bus SPI2/PSI5, die hier beispielhaft den Sensor-Teil der mikroelektronischen Schaltung IC mit dem Mikrorechner µC verbindet
- SQ: Zündelement
- SSSE: Sensorsignal-Simulationseinheit
- T₁: erster Zündtransistor
- T₂: zweiter Zündtransistor
- Tₑₓₜ: Sicherheitsschalter
- V₅: Knoten V₅ zwischen dem Sicherheitsschalter Tₑₓₜ und dem ersten Zündtransistor T₁ mit V5-Potenzial
- V_{bat}: Versorgungsspannungsleitung, die typischerweise auf Versorgungsspannungspotenzial liegt
- V_{G}: Ausgang des Transkonduktanzverstärkers OTA
- V_{G2}: Steuereingang des Sicherheitsschalters Tₑₓₜ
- V_{R}: Regelsignal. Das Regelsignal ist bevorzugt das Ausgangssignal des ersten Spannungsteilers R₁, R₂
- V_{ref}: Referenzspannung

## Patentansprüche

1. Vorrichtung zur Auslösung einer Schutzfunktion in einem Fahrzeug durch Aktivierung einer ersten Auslösekomponente, die neben mindestens einer weiteren Auslösekomponente für die Auslösung der Schutzfunktion erforderlich ist, wie z.B. bei einem Airbag, einem Gurtstraffer oder einem Gurttrenner, mit
- einem Mikrorechner (µC),
- einer ersten Auslösekomponente (Tₑₓₜ), die neben mindestens einer weiteren Auslösekomponente für die Auslösung der Schutzfunktion erforderlich ist,
- einer mikroelektronischen Schaltung (IC), die aufweist
- mindestens eine weitere Auslösekomponente (CTR, T1, T2),
- eine erste Datenbusschnittstelle (MSPI),
- eine zweite Datenbusschnittstelle (SSPI),
- eine Sensorbusschnittstelle (PSI5IF), an die ein mit mehreren Sensoren versehener Sensorbus anschließbar ist,
- eine erste Sensorsignal-Simulationseinheit (SSSE) zur Simulation von Sensorsignalen,
- wobei der zweiten Datenbusschnittstelle (SSPI) innerhalb der mikroelektronischen Schaltung (IC) Sensordaten zuführbar sind, die in über die Sensorbusschnittstelle (PSI5IF) empfangenen Sensorsignalen enthalten sind, und
- wobei der Sensorbusschnittstelle (PSI5IF) innerhalb der mikroelektronischen Schaltung (IC) simulierte Sensorsignale zuführbar sind, die der zweiten Datenbusschnittstelle (SSPI) zuführbar sind, und zwar mit oder ohne weiteren Sensordaten, die in über die Sensorbusschnittstelle (PSI5IF) empfangenen Sensorsignalen enthalten sind, und
- eine Sicherheitseinheit (SHE), die Sensordaten, die innerhalb der mikroelektronischen Schaltung (IC) der zweiten Datenbusschnittstelle (SSPI) zuführbar sind, überprüft und insbesondere auf mögliche Fehler der Sensordaten und/oder auf eine potentielle Auslösung der Schutzfunktion anzeigende Auffälligkeiten der Sensordaten hin überprüft,
**dadurchgekennzeichnet,**
- dass der Mikrorechner (µC) in Kommunikationsverbindung mit der ersten Datenbusschnittstelle (MSPI) steht und über diese erste Datenbusschnittstelle (MSPI) die Sicherheitseinheit (SHE) der mikroelektronischen Schaltung (IC) zur Überprüfung der der zweiten Datenbusschnittstelle (SSPI) zuführbaren Sensordaten veranlasst und/oder die Sensorsignal-Simulationseinheit (SSSE) veranlasst, simulierte Sensorsignale zu erzeugen, und/oder an die Sensorsignal-Simulationseinheit (SSSE) Daten für die Erzeugung von simulierten Sensorsignalen zuführt,
- dass der Mikrorechner (µC) über die erste Datenbusschnittstelle (MSPI) die Sensorsignal-Simulationseinheit (SSSE) veranlasst, Sensorsignale zu simulieren und
- dass der Mikrorechner (µC) in Kommunikationsverbindung mit der zweiten Datenbusschnittstelle (SSPI) steht und über die zweite Datenbusschnittstelle (SSPI) insbesondere auf einen von dem Mikrorechner (µC) an die zweite Datenbusschnittstelle (SSPI) gerichtetes Anforderungssignal hin Sensordaten, die in über die Sensorbusschnittstelle (PSI5IF) empfangenen Sensorsignalen enthalten und innerhalb der mikroelektronischen Schaltung (IC) der zweiten Datenbusschnittstelle (SSPI) zuführbar sind und/oder Sensordaten abfragt, die in von der Sensorsignal-Simulationseinheit (SSSE) simulierten sowie innerhalb der mikroelektronischen Schaltung (IC) an die Sensorbusschnittstelle (PSI5IF) übertragenen Sensorsignalen enthalten und innerhalb der mikroelektronischen Schaltung (IC) der zweiten Datenbusschnittstelle (SSPI) zuführbar sind.

2. Vorrichtung nach Anspruch 1, **dadurch gekennzeichnet, dass** der Sensorbusschnittstelle (PSI5IF) über den an diese anschließbaren Sensorbus Messsignale externer Sensoren und/oder von einer weiteren externen Sensorsignal-Simulationseinheit (PSI) simulierte Sensorsignale zuführbar sind.

3. Vorrichtung nach Anspruch 1 oder 2, **dadurch gekennzeichnet, dass** die erste Auslösekomponente mindestens einen extern der mikroelektronischen Schaltung (IC) angeordneten Sicherheitsschalter (Tₑₓₜ, S₁) aufweist.

4. Vorrichtung nach einem der Ansprüche 1 bis 3, **dadurch gekennzeichnet, dass** die mindestens eine weitere Auslösekomponente zwei weitere in Reihe geschaltete Schalter (T1, T2) in Form von Halbleiterbauelementen und insbesondere in Form von Transistoren und eine Ansteuerschaltung (CTR) für diese aufweist, wobei zwischen den beiden Schaltern (T1, T2) in Reihe mit diesen ein externes Zündelement (SQ) schaltbar ist.

## Claims

1. A device for initiating a protective function in a vehicle by activating a first initiating component which, besides at least one further initiating component, is required for the initiation of the protective function, such as for an airbag, a belt tensioner or a belt separator, the device comprising
- a microcomputer (µC),
- a first initiating component (Tₑₓₜ) which, besides at least one further initiating component, is required for the initiation of the protective function,
- a microelectronic circuit (IC), which comprises
- at least one further initiating component (CTR, T1, T2),
- a first data bus interface (MSPI),
- a second data bus interface (SSPI),
- a sensor bus interface (PSI51F) adapted for connection to a sensor bus provided with a plurality of sensors,
- a first sensor signal simulation unit (SSSE) for simulating sensor signals,
- wherein sensor data can be supplied to the second data bus interface (SSPI) within the microelectronic circuit (IC), which data are contained in sensor signals received by the sensor bus interface (PSI51F), and
- wherein simulated sensor signals can be supplied to the sensor bus interface (PSI51F) within the microelectronic circuit (IC), which signals can be supplied to the second data bus interface (SSPI), namely with or without further sensor data, which are contained in sensor signals received by the sensor bus interface (PSI51F), and
- a safety unit (SHE) which checks sensor data that can be supplied to the second data bus interface (SSPI) within the microelectric circuit (IC), and in particular checks these for possible sensor data errors and/or for abnormalities of the sensor data indicating a potential initiation of the protective function,
**characterized in that**
- the microcomputer (µC) is in communication connection with the first data bus interface (MSPI) and, via this data bus interface (MSPI), causes the safety unit (SHE) of the microelectronic circuit (IC) to check the sensor data adapted to be supplied to the second data bus interface (SSPI) and/or causes the sensor signal simulation unit (SSSE) to generate simulated sensor signals and/or supplies date to the sensor signal simulation unit (SSSE) for the generation of simulated sensor signals,
- via the first data bus interface (MSPI), the microcomputer (µC) causes the sensor signal simulation unit (SSSE) to simulate sensor signals, and
- the microcomputer (µC) is in communication with the second data bus interface (SSPI) and, via the second data bus interface (SSPI), in particular in response to a request signal from the microcomputer (µC) to the second data bus interface (SSPI), retrieves sensor data contained in sensor signals which are received via the sensor bus interface (PSI51F) and are adapted to be supplied to the second data bus interface (SSPI) within the microelectronic circuit (IC) and/or retrieves sensor data that contain sensor signals simulated by the sensor signal simulation unit (SSSE) and are supplied to the sensor bus interface (PSI51F) within the microelectronic circuit (IC) and are adapted to be supplied to the second data bus interface (SSPI) within the second circuit (IC).

2. The device according to claim 1, **characterized in that** the sensor bus interface (PSI5IF) is configured to be supplied with measuring signals of external sensors and/or sensor signals simulated by a further external sensor signal simulation unit (PSI) via sensor bus adapted to be connected to said interface.

3. The device according to claim 1 or 2, **characterized in that** the first initiating component comprises at least one safety switch (Tₑₓₜ, S₁) arranged external to the microelectronic circuit (IC).

4. The device according to one of claims 1 to 3, **characterized in that** the at least one further initiating component comprises two further series-connected switches (T1, T2) in the form of semiconductor elements, and in particular in the form of transistors, and a control circuit (CTR) for the same, an external ignition element (SQ) being connectible between the two switches (T1, T2) in series therewith.

## Revendications

1. Dispositif pour déclencher une fonction de protection dans un véhicule par activation d'un premier composant de déclenchement, lequel est nécessaire au déclenchement de la fonction de protection en plus d'au moins un composant de déclenchement ultérieur, comme par exemple dans le cas d'un airbag, d'un tendeur de ceinture ou d'un coupe-ceinture, doté
- d'un micro-ordinateur (µC),
- d'un premier composant de déclenchement (Tₑₓₜ), lequel est nécessaire au déclenchement de la fonction de protection en plus d'au moins un composant de déclenchement ultérieur,
- d'un circuit microélectronique (IC), lequel comporte
∘ au moins un composant de déclenchement ultérieur (CTR, T1, T2),
∘ une première interface de bus de données (MSPI),
∘ une deuxième interface de bus de données (SSPI),
∘ une interface de bus de capteur (PSI5IF), à laquelle le bus de capteur prévu avec plusieurs capteurs peut être raccordé,
∘ une première unité de simulation de signal de capteur (SSSE) pour simuler des signaux de capteur,
∘ dans lequel des données de capteur qui sont contenues dans des signaux de capteur reçues par le biais de l'interface de bus de capteur (PSI5IF) peuvent être envoyées à la deuxième interface de bus de données (SSPI) à l'intérieur du circuit microélectronique (IC), et
∘ dans lequel des signaux de capteur simulés, pouvant être envoyés à la deuxième interface de bus de données (SSPI), peuvent être envoyés à l'interface de bus de capteur (PSI5IF) à l'intérieur du circuit microélectronique (IC), à savoir avec ou sans données de capteur ultérieures qui sont contenues dans des signaux de capteur reçus par le biais de l'interface de bus de capteur (PSI5IF), et
∘ une unité de sécurité (SHE), laquelle vérifie les données de capteur pouvant être envoyées à la deuxième interface de bus de données (SSPI) à l'intérieur du circuit microélectronique (IC) et en particulier vérifie l'absence d'erreurs dans les données de capteur et/ou l'absence de caractéristiques des données de capteur indiquant un déclenchement potentiel de la fonction de protection,
**caractérisé**
- **en ce que** le micro-ordinateur (µC) est en liaison de communication avec la première interface de bus de données (MSPI) et, par le biais de cette première interface de bus de données (MSPI), permet à l'unité de sécurité (SHE) du circuit microélectronique (IC) de vérifier les données de capteur pouvant être envoyées à la deuxième interface de bus de données (SSPI) et/ou permet à l'unité de simulation de signal de capteur (SSSE) de générer des signaux de capteur simulés, et/ou envoie à l'unité de simulation de signal de capteur (SSSE) des données pour générer des signaux de capteur simulés,
- **en ce que** le micro-ordinateur (µC), par le biais de la première interface de bus de données (MSPI), permet à l'unité de simulation de signal de capteur (SSSE) de simuler des signaux de capteur et
- **en ce que** le micro-ordinateur (µC) est en liaison de communication avec la deuxième interface de bus de données (SSPI) et, par le biais de la deuxième interface de bus de données (SSPI), en particulier sur un signal de demande provenant du micro-ordinateur (µC) et dirigé vers la deuxième interface de bus de données (SSPI), requiert des données de capteur qui sont contenues dans des signaux de capteur reçus par le biais de l'interface de bus de capteur (PSI5IF) et qui peuvent être envoyées à la deuxième interface de bus de données (SSPI) à l'intérieur du circuit microélectronique (IC) et/ou des données de capteur qui sont contenues dans des signaux de capteur simulés par l'unité de simulation de signal de capteur (SSSE) ainsi que transmis à l'interface de bus de capteur (PSI5IF) à l'intérieur du circuit microélectronique (IC) et qui peuvent être envoyées à la deuxième interface de bus de données (SSPI) à l'intérieur du circuit microélectronique (IC).

2. Dispositif selon la revendication 1, **caractérisé en ce que** des signaux de mesure de de capteurs externes et/ou des signaux de capteur simulés par une unité de simulation de signal de capteur (PSI) ultérieure externe peuvent être envoyés à l'interface de bus de capteur (PSI5IF) par le biais du bus de capteur pouvant être raccordé à celle-ci.

3. Dispositif selon la revendication 1 ou 2, **caractérisé en ce que** le premier composant de déclenchement comporte au moins un interrupteur de sécurité (Tₑₓₜ, S₁) disposé comme externe au circuit microélectronique (IC).

4. Dispositif selon l'une des revendications 1 à 3, **caractérisé en ce que** l'au moins un composant de déclenchement ultérieur comporte deux interrupteurs (T1, T2) raccordés en série sous forme de composants à semiconducteurs et en particulier sous forme de transistors et un circuit de commande (CTR) pour ceux-ci, dans lequel un élément de mise à feu externe (SQ) peut être raccordé entre les deux interrupteurs (T1, T2) en série avec ceux-ci.
